# EUROPEAN PATENT APPLICATION

(11) **EP 4 847 155 A1**
(43) Date of publication of application: **02.12.2026**
(21) Application number: 24173952.3
(22) Date of filing: 02.05.2024
(51) Int. Cl.: B09B 3/40, B09B 3/70, B09B 3/80, C01B 7/19, C01B 9/08, C22B 1/00, H01M 6/52, H01M 10/54, B09B 101/16

(54) **TREATMENT OF BATTERY WASTE MATERIAL DURING RECYCLING PROCESSES**

(71) Applicant: Northvolt Revolt AB, 112 47 Stockholm (SE)
(72) Inventor: Musavi, Zari, 174 64 Sundbyberg (SE); Alemrajabi, Mahmood, 170 67 Solna (SE); Meco Morales, Eric, 723 46 Västerås (SE); Sadegh Vaziri, Ramiar, 120 78 Stockholm (SE)

(57) **Abstract**

The disclosure relates to a method of recycling a battery comprising flour-containing electrolyte salts. These salts may therefore undergo thermal hydrolysis to form HF, which is problematic as heating is needed for efficient removal of liquids. This disclosure aims to solve the problem by adding a treatment step prior to drying that serves to convert the fluorine-containing electrolyte salts into derivatives, which are not prone to thermal degradation. The present disclosure therefore offers a safe approach to recycle batteries comprising flour-containing electrolyte salts.

## Description

### TECHNICAL FIELD

The disclosure relates to a method of treating solid battery waste material containing a fluorine-containing electrolyte salt to prevent HF formation during a subsequent heating step.

### BACKGROUND

To decrease the environmental footprint produced by batteries, an important consideration is the recyclability of the battery.

Presently, recycling methods involves the steps of shredding, drying, sorting, and electrolyte recovery. However, from a safety point of view, the drying step is problematic.

State-of-the-art batteries comprise electrolyte salts such as LiPF₆, NaPF₆, LiF, NaF, LiBF₄, NaBF₄, and/or a combination thereof. However, drying typically requires temperatures of from about 150 °C to about 250 °C, which is well above the thermal decomposition temperature of said electrolyte salts. These salts may therefore undergo thermal hydrolysis to form HF.

HF is highly corrosive and highly poisonous to the human body. Therefore, a lot of safety measurements are needed during the subsequent steps within the recycling process. For example, expensive equipment is needed to circumvent corrosion.

It would therefore be desirable to hinder formation of HF during battery recycling.

Methods to limit HF formation do exist. However, these typically involve limited heating during the drying step, resulting in only limited removal of liquids. This in turn means that the subsequent recycling of the various components within the battery is made more difficult.

There is therefore an unmet need of finding a method that reduces the formation of HF, while still allowing high temperature drying.

### SUMMARY

An object of the present disclosure is generally to provide a method of recycling batteries comprising a fluorine-containing electrolyte salt, without releasing dangerous HF.

In particular, there is provided a method of treating solid waste material comprising a fluorine-containing electrolyte salt, said method comprising the steps of
a. providing solid waste material comprising a fluorine-containing electrolyte salt;
b. subjecting said solid waste material to an aqueous metal hydroxide and/or metal carbonate solution so as to convert at least part of the fluorine-containing electrolyte salt to metal fluoride.

### FIGURES SUMMARY

Figure 1: Schematic overview of a method of recycling, wherein the alkaline treatment step (202) hinders the formation of HF during the drying step (203).
Figure 2: Graph showing the pH as a function of time after addition of NaOH solution to black mass.
Figure 3a: Graph showing the results of *in silico* experiments simulating the reaction of LiPF₆ with LiOH.
Figure 3b: Graph showing the results of *in silico* experiments simulating the reaction of LiPF₆ with LiOH.

### DETAILED DESCRIPTION

The disclosure relates to a method of treating solid battery waste material containing a fluorine-containing electrolyte salt to prevent HF formation during a subsequent drying step.

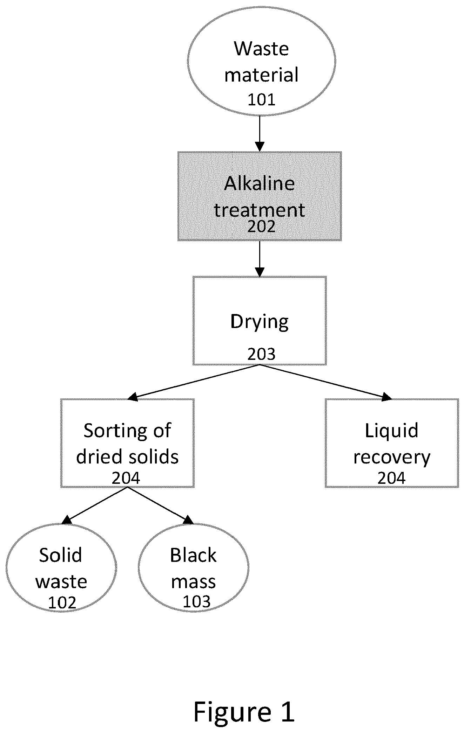

The overall process of recycling a battery is depicted in Figure 1. Waste material (101) is first base treated (202), then dried (203). The dried material is sorted (204) to obtain black mass (103) and solid waste (102). The liquids which are removed during the drying step are recovered in a liquid recovery step (204).

A battery comprises two electrodes; an anode and a cathode respectively. Each of the electrodes comprises an electroactive layer, which is disposed on a current collector. The battery further comprises a separator, which is placed in between the two electrodes, and an electrolyte which facilitates the movement of ions between the electrodes.

Each component within a battery is described in the following:

### ELECTRODE ACTIVE LAYER

In the context of this disclosure, an "electrode active layer" is a layer comprising binder, electrode active material, and optionally conductive additives.

To produce an electrode active layer, electrode active material, a binder and optionally a conductive additive are typically dispersed in a dispersant to form a slurry. The slurry is then deposited on a current collector to form the electrode active layer.

The term "electrode active material" is to be understood as an electrochemical species which can be oxidized and reduced in a system which enables a cell to produce electric energy during discharge.

The electrode active material may be either cathode active material or anode active material.

An "anode active layer" is a layer comprising binder, anode active material, and optionally conductive additives.

A "cathode active layer" is a layer comprising binder, cathode active material, and optionally conductive additives.

Each of the components within an electrode active layer will be described below:

### CATHODE ACTIVE MATERIAL

The role of the cathode active material is to reversibly intercalate ions (such as lithium or sodium ions) during cell charge and discharge cycles.

The cathode active material of the disclosure is an intercalation material, wherein the intercalation metal is lithium or sodium.

In the context of the disclosure "cathode active material" refers to any material that is suitable for use as the positive electrochemically active material in a cathode, and suitable for use in a cell.

In an embodiment, the cathode active material is a transition metal complex such as layered lithium metal oxide (LiMO₂) cathode materials. Even more preferably, the cathode active material is a lithium nickel manganese cobalt oxide (NMC) and/or a lithium nickel cobalt aluminium oxide (NCA).

In some embodiments, the cathode active material comprises lithium nickel cobalt manganese oxides (NMC) (LiNi_{1-x-y}CoₓMn_{y}O₂ (0<x+y<1)).

In some embodiments, the cathode active material comprises lithium nickel cobalt aluminium oxides (NCA) (LiNi_{1-x-y}CoₓAl_{y}O₂ (0<x+y<1)).

In some embodiments, the cathode active material comprises lithium nickel cobalt manganese oxides (NMC) (Li_{b}Ni_{1-x-y-z}CoₓMn_{y}A_{z}O₂ (0<x+y+z< 1)), where A is an element other than Li, Ni, Co, Mn or O and wherein 0≤z≤0.05, preferably 0<z≤0.03, more preferably 0.001<z≤0.01, and wherein 0.9≤b≤1.2. A is one or more chosen from the group Al, B, Zr, Ba, Ca, Ti, Mg, Ta, Nb, V, Fe, Ru, Re, Pt and Mo. Preferably, A is chosen from the group Al and Zr.

In preferred embodiments, the NMC cathode materials are lithium rich. As such, the cathode active material typically comprises lithium nickel cobalt manganese oxides (NMC) represented by the formula Li_{b}Ni_{1-x-y-z}CoₓMn_{y}A_{z}O₂ (0<x+y+z<1), where A is an element other than Li, Ni, Co, Mn or O and wherein 0≤z≤0.05, preferably 0<z≤0.03, more preferably 0.001<z≤0.01, and wherein 1.05≤b≤1.2. A is one or more chosen from the group Al, B, Zr, Ba, Ca, Ti, Mg, Ta, Nb, V, Fe, Ru, Re, Pt and Mo. Preferably, A is chosen from the group Al and Zr.

In other embodiments, the layered lithium metal oxide (L₁MO₂) cathode materials are high in nickel. The high-nickel active cathode material may include one or more of the NCA or the NCM. A ratio of the components of the high-nickel active cathode material may range from 1:1:1 to 8:1:1. For example, a ratio of the NCA (e.g. nickel:cobalt:aluminium) or the NCM (e.g. nickel:manganese:cobalt) may be 8:1:1. In one example, the ratio may be 6:2:2. In another example, additionally or alternatively, the ratio may be 5:3:2. In some examples, the NCM or the NCA may comprise a ratio of about 1:1:1.

Alternatively, the cathode active material may comprise any one or a mixture of two or more sodium metal, sodium containing alloys, sodium containing oxides, sodium containing cyanides, or any combination thereof.

For example, the cathode active material may comprise sodium transition metal cyanides having six cyanide groups per formula unit. Each of these cyanide groups connect transition metals within the cathode active material to form a framework with large voids that allow intercalation and de-intercalation of sodium-ions.

Exemplary sodium transition metal cyanides include Prussian Blue (PB) and its derivatives, i.e. Prussian Blue Analogues (PBA). Even more preferably, the cathode active material comprises Prussian Blue Analogues (PBA).

Exemplary Prussian blue analogues include Prussian White, Turnbull's blue, potassium ferricyanide, and potassium ferrocyanide.

In some embodiments, the cathode active material comprises Prussian Blue Analogues (PBAs) having a formula of NaₓM_{y}[Fe_{z}(CN)₆]_{w}, where M is a transition metal. Prussian Blue Analogues (PBA) offer many opportunities for structural variation and hence the properties are highly tuneable. For example, the stoichiometry may vary from 1≤x≤2, 0≤y≤2, 1≤z≤2, and 1≤w≤2.

The transition metals M may be selected from manganese (Mn), Iron (Fe), Aluminium (Al), Titanium (Ti), Nickel (Ni), Vanadium (V) and Cobalt (Co).

Exemplary Prussian Blue Analogues (PBA) includes Fe-Fe-PBA, Mn-Fe-PBA, Fe-Ni-PBA, Ni-PBA, or any combination thereof, especially Fe-Fe-PBA.

In an embodiment, the cathode active material comprises Prussian White. Prussian white (PW) may also be referred to as Berlin White (BW) or Everett's Salt (ES). Prussian white may have a chemical formula of Na₂Fe[Fe(CN)₆].

In the cathode active layer, the cathode active material is typically present in an amount of, by weight, from about 60-99.9 wt% active material, for example from about 70-99.9 wt%, from about 80-99.8 wt%, from about 90-99.6 wt%, or from about 95-99.5 wt% active material. Preferably the cathode active layer comprises from about 96-99.5 wt% active material, even more preferably the cathode active layer comprises about 98 wt% active material.

### ANODE ACTIVE MATERIAL

The role of the anode active material is to reversibly bind ions (such as lithium or sodium ions) during cell charge and discharge cycles.

In the context of the disclosure "anode active material" refers to any material that is suitable for use as the negative electrochemically active material in a cathode, and suitable for use in a cell.

The anode active material may comprise any one or a mixture of two or more of carbon black, hard carbon, graphite, or silicon.

Preferably, the anode active material comprises hard carbon.

In the anode active layer, the anode active material is typically present in an amount of, by weight, from about 60-99.9 wt% active material, for example from about 70-99.9 wt%, from about 80-99.8 wt%, from about 90-99.6 wt%, or from about 95-99.5 wt% active material. Preferably the anode active layer comprises from about 96-99.5 wt% active material, even more preferably the anode active layer comprises about 98 wt% active material.

### BINDER

The binder adhesively connects all the electrode materials for long-term charge/discharge cycling. The role of the optional conductive additive is to improve the electronic properties of the cathode and to provide an electrical connection between the particles of cathode active material in the cathode.

Suitable binders are well known in the art and may be water-insoluble or water-soluble.

Examples of binders include styrene butadiene rubber (SBR), carboxymethyl cellulose (CMC), sodium lignosulphonate (NaLS or LgSA), sodium alginate, polyvinylidene fluoride (PVDF), polyacetylene, sodium carboxymethyl cellulose (Na-CMC), polyacrylic acid (PAA), sodium polyacrylate (PANa), polytetrafluoro ethylene (PTFE), hexafluoro propylene (HFP), or any combination thereof.

The electrode active layer may comprise, by weight, from 0.01-10 wt% binder, for example from about 0.02-8 wt%, from about 0.05-6 wt%, or from about 0.06-4 wt% binder. Preferably the cathode active layer comprises from about 0.1 to 3 wt% binder, even more preferably 0.2 wt% to 2 wt% binder, such as from 0.5 wt% to 1.5 wt% binder. Most preferably the electrode active layer comprises about 1 wt% binder.

### CONDUCTIVE ADDITIVES

Suitable conductive additives include graphene, graphene fiber, fibrous graphene, porous graphene, nanoporous graphene, nanoporous graphene fiber, holey graphene, perforated graphene, graphene foam, graphene aerogel, carbon nanofiber (CNF), porous carbon nanofiber, carbon nanofoam, carbon microfoam, graphite, amorphous carbon, carbon black, acetylene black, mesocarbon microbead (MCMB), pitch-based carbon, coke powders, single-walled carbon nanotube, thin-walled carbon nanotube, multi-walled carbon nanotube, and/or a combination thereof. These conductive additives may be used alone or in combination.

Preferred conductive additives are selected from carbon black, graphite, carbon nanotubes, or mixtures thereof.

In an embodiment, the cathode active layer may comprise from 0-10 wt% conductive additive, for example from about 0.01-8 wt%, from about 0.05-6 wt%, or from about 0.06-4 wt% conductive additive. Preferably the cathode active layer comprises from about 0.1 to 3 wt% conductive additive, even more preferably 0.2 wt% to 2 wt% conductive additive, such as from 0.5 wt% to 1.5 wt% conductive additive. Most preferably the cathode active layer comprises about 1 wt% conductive additive.

In an embodiment, the anode active layer may comprise from 0-10 wt% conductive additive, for example from about 0.01-8 wt%, from about 0.05-6 wt%, or from about 0.06-4 wt% conductive additive. Preferably the anode active layer comprises from about 0.5 to 3 wt% conductive additive.

Typically, when the anode active material comprises graphite, no conductive additive is needed. Other carbon based anode active materials such as hard carbon often require a conductive additive to be included.

### SEPARATOR

A separator is typically a permeable membrane, whose main function is to keep the two electrodes apart to prevent electrical short circuits while also allowing the transport of sodium ions that are needed to close the circuit during the passage of current in an electrochemical cell.

Typically, a separator is thin, and ideally as thin as practical while fulfilling its core function of electrically isolating the anode from the cathode. For example, the separator may have a thickness of from 1 µm to 20 µm, such as from 2 µm to 15 µm, for example from 5 µm to 12 µm.

The separator of a lithium ion battery typically comprises polyethylene (PE), polypropylene (PP) and/or combinations thereof.

The separator of a sodium ion battery typically comprises polyethylene (PE), polypropylene (PP) and/or combinations thereof, but may alternatively comprise cellulosic material. By "cellulosic material" is meant any kind of material that comprises cellulose or derivatives thereof. For example, hemicellulose, carboxy methyl cellulose (CMC), or a combination thereof.

Cellulose based materials typically used in sodium ion cells are environmentally friendly and have good thermal stability. Typically, when cellulose or derivatives thereof is used as a separator, a sheet of cellulose or a derivative thereof is disposed between the anode and the cathode during formation of the cell.

The cellulose separator may contain other components to act as a stabiliser within the layer. Suitable materials include polyaramid fibres.

### CURRENT COLLECTOR

The current collector bridges the electrons from active materials toward the external devices.

Typically, current collectors are made from aluminium or copper.

### ELECTROLYTE

The cell will typically comprise an electrolyte to facilitate the transport of lithium or sodium ions between the cathode and the anode.

The electrolyte comprises a mixture of one or more solvents, one or more electrolytes salts, and one or more additives.

The solvent typically comprises linear carbonates, linear carboxylates, cyclic carbonates, or a combination thereof.

The electrolyte salt comprises a fluorine-containing electrolyte salt. In this disclosure, fluorine-containing salt, fluorine-containing electrolyte salt and fluorine-containing solid electrolyte may be used interchangeably.

For example, the electrolyte salt may comprise one or more selected from the group consisting of lithium hexafluorophosphate (LiPF₆), sodium hexafluorophosphate (NaPF₆), lithium hexafluoroarsenate (LiAsF₆), sodium hexafluoroarsenate (NaAsF₆), lithium hexafluoroantimonate (LiSbF₆), sodium hexafluoroantimonate (NaSbF₆), lithium tetrafluoroborate (LiBF₄), sodium tetrafluoroborate (NaBF₄), lithium bis(fluorosulfonyl)imide (F₂LiNO₄S₂), sodium bis(fluorosulfonyl)imide (F₂NaNO₄S₂), lithium bis(trifluoromethanesulfonyl)imide (LiC₂F₆NO₄S₂), sodium bis(trifluoromethanesulfonyl)imide (NaC₂F₆NO₄S₂), lithium trifluoromethanesulfonate (LiCF₃SO₃), sodium trifluoromethanesulfonate (NaCF₃SO₃), lithium oxalyldifluoroborate (LiBF₂C₂O₄), sodium oxalyldifluoroborate (NaBF₂C₂O₄), lithium tetrafluorooxalatophosphate (LiPF₄C₂O₄), sodium tetrafluorooxalatophosphate (NaPF₄C₂O₄), LiPF₂C₄O₈, NaPF₂C₄O₈, Li(CF₃)₂PF₄, Na(CF₃)₂PF₄, Li(CF₃)₃PF₃, Na(CF₃)₃PF₃, Li(CF₃)₄PF₂, Na(CF₃)₄PF₂, Li(CF₃)₅PF, Na(CF₃)₅PF, Li(CF₃)₆P, Na(CF₃)₆P, LiC₄F₉SO₃, NaC₄F₉SO₃, LiCF₃CF₂SO₃, NaCF₃CF₂SO₃, Li(CF₃SO₂)₂N, Na(CF₃SO₂)₂N, Li(FSO₂)₂N, Na(FSO₂)₂N, LiCF₃CF₂(CF₃)₂CO, NaCF₃CF₂(CF₃)₂CO, Li(CF₃SO₂)₂CH, Na(CF₃SO₂)₂CH, Li(SF₅)₃C, Na(SF₅)₃C, Li(CF₃SO₂)₂C, Na(CF₃SO₂)₂C, LiCF₃(CF₂)₇SO₃, NaCF₃(CF₂)₇SO₃, LiCF₃CO₂, NaCF₃CO₂, Li(CF₃CF₂SO₂)₂N, and Na(CF₃CF₂SO₂)₂N.

Preferably, the electrolyte salt may comprise one or more selected from the group consisting of lithium hexafluorophosphate (LiPF₆), sodium hexafluorophosphate (NaPF₆), lithium hexafluoroarsenate (LiAsF₆), sodium hexafluoroarsenate (NaAsF₆), lithium hexafluoroantimonate (LiSbF₆), sodium hexafluoroantimonate (NaSbF₆), lithium tetrafluoroborate (LiBF₄), sodium tetrafluoroborate (NaBF₄), lithium bis(fluorosulfonyl)imide (LiF₂NO₄S₂), sodium bis(fluorosulfonyl)imide (NaF₂NO₄S₂), lithium bis(trifluoromethanesulfonyl)imide (LiC₂F₆NO₄S₂), sodium bis(trifluoromethanesulfonyl)imide (NaC₂F₆NO₄S₂), lithium oxalyldifluoroborate (LiBF₂C₂O₄), sodium oxalyldifluoroborate (NaBF₂C₂O₄), lithium tetrafluorooxalatophosphate (LiPF₄C₂O₄), sodium tetrafluorooxalatophosphate (NaPF₄C₂O₄), LiPF₂C₄O₈, NaPF₂C₄O₈, Li(CF₃)₂PF₄, Na(CF₃)₂PF₄, Li(CF₃)₃PF₃, Na(CF₃)₃PF₃, Li(CF₃)₄PF₂, Na(CF₃)₄PF₂, Li(CF₃)₅PF, Na(CF₃)₅PF, Li(FSO₂)₂N, Na(FSO₂)₂N, Li(SF₅)₃C, and Na(SF₅)₃C.

More preferably, the electrolyte salt may comprise one or more selected from the group consisting of lithium hexafluorophosphate (LiPF₆), sodium hexafluorophosphate (NaPF₆), lithium hexafluoroarsenate (LiAsF₆), sodium hexafluoroarsenate (NaAsF₆), lithium hexafluoroantimonate (LiSbF₆), sodium hexafluoroantimonate (NaSbF₆), lithium tetrafluoroborate (LiBF₄), sodium tetrafluoroborate (NaBF₄), lithium bis(fluorosulfonyl)imide (LiF₂NO₄S₂), sodium bis(fluorosulfonyl)imide (NaF₂NO₄S₂), lithium bis(trifluoromethanesulfonyl)imide (LiC₂F₆NO₄S₂), sodium bis(trifluoromethanesulfonyl)imide (NaC₂F₆NO₄S₂), lithium oxalyldifluoroborate (LiBF₂C₂O₄), sodium oxalyldifluoroborate (NaBF₂C₂O₄), lithium tetrafluorooxalatophosphate (LiPF₄C₂O₄), and sodium tetrafluorooxalatophosphate (NaPF₄C₂O₄).

Even more preferably, the electrolyte salt comprises one or more selected from the group consisting of lithium hexafluorophosphate (LiPF₆), sodium hexafluorophosphate (NaPF₆), lithium hexafluoroarsenate (LiAsF₆), sodium hexafluoroarsenate (NaAsF₆), lithium tetrafluoroborate (LiBF₄), and sodium tetrafluoroborate (NaBF₄).

Most preferably, the electrolyte salt comprises (LiPF₆) or sodium hexafluorophosphate (NaPF₆).

Additionally, the electrolyte salt may comprise non-flourine containing salts such as lithium perchlorate (LiClO₄) or sodium perchlorate (NaClO₄).

As is evident, the solid electrolytes mentioned above consist of a positive metal ion and a negative counter ion. The positive metal ion is chosen so as to fit to the type of battery. This means that the positive metal ion is Na⁺ for a sodium ion battery, while it is Li⁺ for a lithium ion battery.

The electrolyte additives may include vinylene carbonate (VC), 1,3-propane sulphonic acid, fluoroethylene carbonate, and succinonitrile.

The weight ratio between the one or more solvents, one or more solid electrolytes, and one or more additives is typically from 80-85 : 12.5-15 : 2-8.

### RECYCLING

Once a battery reaches the end of its useful life, the battery pack may be collected for recycling purposes. Typically, this involves discharging and subsequent dismantling of the batteries to obtain individual cells.

Discharging may proceed using for example electrical discharge or solution discharge.

Preferably, the battery is subjected to electrical discharge. When subjecting the battery to electrical discharge, external cooling may be necessary.

Alternatively, the battery may be subjected to solution discharge. Solution discharge involves subjecting the cells to a cold brine solution (between about 0 °C and about 10 °C) which further comprises an antioxidant. Exemplary antioxidants include sodium sulphite, sodium metabisulphite, sodium thiosulphate or sulphur dioxide.

Then, the discharged battery is dismantled to obtain individual cells.

### Waste material

The individual cells, battery modules, battery packs, or batteries are then converted into solid waste material. Solid waste material, battery waste material, and waste material may be used interchangeably throughout the disclosure.

The waste material of the present disclosure material comprises a fluorine-containing electrolyte salt. Preferably, said salt is LiPF₆.

The solid waste material typically comprises black mass, electrolyte and optionally electrode foils, separator and cell housing. Given the presence of the electrolyte material, the solid waste material is typically partly wet. For example, the solid waste material may comprise from 3 wt% to 20 wt% liquid, such as from 5 wt% to 15 wt% liquid.

Any methodology that allows for conversion of batteries or individual cells into solid waste material may be used.

Typically, the individual cells, battery modules, battery packs, or batteries are crushed and/or shredded to provide waste material. Both processes involve fractionating the battery into smaller parts.

In some embodiments, the cells are shredded using shredders, such as using industrial scale shredders.

Shredded battery material typically comprises black mass, electrolyte, and electrode foils, and optionally separator and cell housing.

By "cell housing" is meant the parts of the cell and/or battery array that surround the electrodes, such as the casing, current collector, and end terminals, as well as the framework and fixing components for any battery array (busbars, casing, terminals, metallic screws, rivets etc.). The cell housing represents a collection of components and materials, which may be metal, plastic or ceramic.

Optionally, the solid waste material may be comminuted such as by grinding or milling to reduce the particle size of the material.

### Alkaline treatment

Typically, in prior art processes the solid waste material obtained by shredding is dried at elevated temperatures prior to further sorting and separation to recover the recyclable and valuable components. However, fluorine-containing solid electrolytes undergoes thermal decomposition resulting in the formation of HF, which is a highly toxic and corrosive gas. This is particularly true for LiPF₆.

To circumvent this problem, the method of this disclosure aims to convert fluorine-containing solid electrolytes such as LiPF₆ into safer (i.e. more thermally stable) components prior to drying. For example the fluorine-containing electrolyte salt may be converted into a metal fluoride.

To do so, the solid waste material is subjected to aqueous alkaline conditions. This converts the fluorine-containing electrolyte salts such as LiPF₆ into safer products such as KF, LiF, LiP(OH)₆, H₂O, Li₃PO₄, K₃PO₄, LiOH, Li₃PO₄ and/or a combination thereof.

For example, the reaction between LiPF₆ and NaOH may be represented by the following reaction scheme:

8 NaOH + LiPF₆ → 5 NaF + Na₃PO₄ + LiF + 4H₂O

By converting fluorine-containing electrolyte salts such as LiPF₆ into safer components, the subsequent drying step is no longer prone to form HF.

In an embodiment, a method of treating solid waste material containing a fluorine-containing electrolyte salt comprises the steps of
a. providing solid waste material comprising a fluorine-containing electrolyte salt;
b. subjecting said solid waste material to an aqueous metal hydroxide and/or metal carbonate solution so as to convert at least part of the fluorine-containing electrolyte salt to metal fluoride.

By "an aqueous metal hydroxide and/or metal carbonate solution" is meant an aqueous solution which comprises metal hydroxide, metal carbonate or a combination thereof.

In an embodiment, the solid waste material is subjected to an aqueous metal hydroxide and/or metal carbonate solution so as to convert at least part of the fluorine-containing electrolyte salt to safer components, which are not prone to thermal degradation while subjected to heating.

The process of the disclosure results in at least part of the fluorine-containing electrolyte salt being converted to metal fluoride. Preferably, all fluorine-containing electrolyte salt is converted to safer products such as metal fluoride. However, in some embodiments, the conversion may not be complete. For example, up to 1%, such as up to 5%, for example up to 10%, such as up to 20% of the fluorine-containing electrolyte salt may remain after step b.

The metal hydroxide may be selected from potassium hydroxide (KOH), sodium hydroxide (NaOH), barium hydroxide (Ba(OH)₂), caesium hydroxide (CsOH), strontium hydroxide (Sr(OH)₂), calcium hydroxide (Ca(OH)₂), lithium hydroxide (LiOH), rubidium hydroxide (RbOH), or a combination thereof.

Preferably, the metal hydroxide is selected from NaOH, KOH, LiOH, or a combination thereof.

The metal carbonate may be selected from potassium carbonate (K₂CO₃), sodium carbonate (Na₂CO₃), barium carbonate (BaCO₃), caesium carbonate (Cs₂CO₃), strontium carbonate (SrCO₃), calcium carbonate (CaCO₃), lithium carbonate (Li₂CO₃), rubidium carbonate (Rb₂CO₃), or a combination thereof.

Preferably, the metal carbonate is selected from Na₂CO₃, K₂CO₃, Li₂CO₃, or a combination thereof.

Even more preferably, the metal carbonate is Na₂CO₃.

Without wishing to be bound by theory, it is believed that the addition of a metal carbonate such as Na₂CO₃ enhances the safety of the process. A portion of the Li from the electrolyte salt or cell cathode material may be converted into Li metal. Li metal is highly reactive towards oxygen resulting in potential safety risks. By adding Na₂CO₃, the Li may be converted into less reactive Li₂CO₃ resulting in increased safety.

The solid waste material may be provided in any way. For example, the solid waste material may be obtained from a supplier. Alternatively, the solid waste material may be obtained from a cell or battery, for example using the steps mentioned previously in this disclosure.

The step of subjecting solid waste material to an aqueous metal hydroxide and/or metal carbonate solution may also be referred to as the alkaline treatment step.

Subjecting the solid waste material to aqueous metal hydroxide and/or metal carbonate typically involves depositing (e.g. by spraying) said aqueous metal hydroxide and/or metal carbonate solution onto the solid waste material.

The alkaline treatment step may involve stirring. Stirring is beneficial as it promotes efficient mixing, ensures a uniform concentration of reactants, and can increase the rate of reaction. Furthermore, stirring helps distribute heat evenly throughout the system. This is particularly beneficial as the reaction to convert the fluorine-containing electrolyte salts into safer products is exothermic, and so temperature control is desirable.

The alkaline treatment step typically proceeds in a homogeniser. The homogeniser provides a safe and inert tank to carry out the alkaline treatment step.

Preferably, the alkaline treatment step (step b) proceeds at a temperature from about 5 °C to about 100 °C, for example from about 10 °C to about 75 °C, such as from about 20 °C to about 60 °C, for example from about 25 °C to about 50 °C.

The alkaline treatment step may finish within 5 hours, for example within 2 hours, such as within 1 hour, for example within 30 minutes. Additionally, the alkaline treatment (step b) may take at least 5 minutes, such as at least 10 minutes, for example at least 20 minutes.

Preferably, the alkaline treatment (step b) occurs in an oxygen reduced atmosphere. For example, the atmosphere may comprise less than 15 vol%, such as less than 10 vol%, for example less than 5 vol%, such as less than 3 vol%, for example less than 1 vol% oxygen.

In an embodiment, the alkaline treatment (step b) occurs under inert atmosphere.

The aqueous metal hydroxide and/or metal carbonate solution comprises from about 5 to about 50 wt%, such as from about 7.5 wt% to about 40 wt%, for example from about 10 wt% to about 30 wt% metal hydroxide, metal carbonate, or metal hydroxide and metal carbonate combined based on the total weight of the solution.

In an embodiment, the aqueous metal hydroxide and/or metal carbonate solution is saturated with metal hydroxide, metal carbonate, or metal hydroxide and metal carbonate combined.

Adding aqueous metal hydroxide introduces additional chemicals to the solid waste material which may impact downstream processing, particularly when separating and purifying the high value black mass. It is therefore preferable to control the amount of aqueous metal hydroxide that is added to the solid waste material.

Typically, a superstoichiometric amount of metal hydroxide, metal carbonate, or metal hydroxide and metal carbonate combined is added to ensure a complete and rapid consumption of fluorine-containing electrolyte salt. Typically, the hydroxide, carbonate, or hydroxide and carbonate combined will be added in at least 50% excess of stoichiometry, for instance 2-5 times stoichiometry.

Stoichiometry will of course depend on the particular fluorine-containing electrolyte salt that is being consumed. However, this can easily be determined by the skilled person for any particular fluorine-containing electrolyte salt. For instance, for PF₆⁻, stoichiometry with hydroxide is 8: 1 (i.e. 8 hydroxide ions react with the PF₆⁻ anion).

The skilled person is further able to determine approximately how much metal hydroxide should be added to the solid waste, based on the desired level of superstoichiometry and the approximate content of the solid waste that is formed from fluorine containing electrolyte salt. This allows calculation of the approximate mass ratio of solid waste to added metal hydroxide. The exact values of mass ratio will depend on the solid waste that is being recycled, but the skilled person is typically able to determine the approximate mass % the solid waste that is comprised of electrolyte, and in turn the approximate mass % of electrolyte salt that is in that electrolyte. Using these approximations, the skilled person is then able to add suitable amounts of hydroxide and/or carbonate to initiate the reactions described herein.

The aqueous metal hydroxide and/or metal carbonate solution is added to achieve a pH value of at least 10, such as at least 11, for example at least 12.

In some circumstances, it may not be possible to determine what constitutes a stoichiometric amount (and hence the suitable superstoichiometric amount of hydroxide and/or carbonate that should be added), since the amount of fluorine-containing electrolyte salt in the solid waste material may not be known.

Consequently, the method of the disclosure may comprise addition of metal hydroxide and/or metal carbonate until a homogenous blend is achieved.

This may be achieved by adding the aqueous metal hydroxide and/or metal carbonate solution in step b. of the method in a stepwise process, wherein the pH of the system is monitored through the method. When the pH remains stable for 5 minutes (preferably for 10 or even 15 minutes), it is an indication that the hydroxide and/or carbonate is not being consumed and the reaction with the fluorine-containing electrolyte salt is completed.

By "stable pH" is meant that the pH changes no more than 0.2 pH-units, such as no more than 0.15 pH-units, for example no more than 0.1 pH-units, such as no more than 0.05 pH-units. The 5 (or 10 or 15) minute period begins at the timepoint at which the pH peaks immediately after an addition of aqueous metal hydroxide and/or carbonate solution.

Typically, the pH stabilises at a pH which is above 10, such as above 10.5, for example above 11, for example above 11.5, such as above 12. Preferably, the pH stabilises at a pH which is above 11. Even more preferably, the pH stabilises at a pH which is above 12.

Thus, as the fluorine-containing electrolyte is converted into metal fluoride proceeds, the hydroxide ion concentration will decrease, and so the pH will fall. When a decrease in pH is observed, additional aqueous metal hydroxide and/or metal carbonate solution should be added.

When the pH is no longer decreasing, the alkaline treatment step is said to be completed, and no additional metal hydroxide and/or metal carbonate solution is added.

In some embodiments, the solid waste material may be rinsed after the alkaline treatment has completed. For example, the solid waste material may be rinsed with water to remove excess metal hydroxide and/or metal carbonate solution.

### Drying

The drying process is a crucial step in battery recycling. The process aims to remove moisture and other volatile substances from battery components, allowing the valuable solid components such as black mass to be processed and recovered.

The liquid within a battery includes liquid electrolytes, which often have low volatility. Thus, this process is usually conducted under vacuum conditions, which allows for low-temperature evaporation. This is needed, as fluorine-containing electrolyte salts such as LiPF₆ thermally decompose at elevated temperatures (such as above 80 °C) to release HF. However, when applying vacuum and low temperatures, it is typically difficult to remove sufficient amounts of solvent to efficiently recycle various components of the battery particularly in commercially viable timescales.

Using the method of the disclosure, higher temperatures may be applied, without risking the formation of large quantities of dangerous HF gas.

In an embodiment, after step b the process further comprises subjecting the treated waste material to drying.

In some embodiments, drying occurs immediately after step b with no other steps in between, that is step b is immediately followed by drying.

In other embodiments, there are steps in between step b and drying.

For example, the treated waste material may upon alkaline treatment be heated to a temperature ranging from about 80 °C to about 300 °C, such as from about 100 °C to about 250 °C, for example from about 150 °C to about 200 °C.

The drying may occur for up to 10 hours, for example up to 8 hours, such as up to 6 hours, for example up to 4 hours, such as up to 2 hours, for example up to 1 hour.

The drying may be a continuous or batch drying process, such as using a vertical or horizontal paddle dryers.

The drying step may be conducted at overpressure, underpressure or ambient pressure.

Preferably, the drying step proceeds at ambient pressure or reduced pressure. For example, the pressure may be from 50,000 Pa to 110,000 Pa , such as from 80,000 Pa to 110,000 Pa.

The drying process results in removal of liquid. Therefore, the mass of treated solid waste material will decrease during the drying process. For example, the mass of the treated solid waste material may be reduced by at least 5%, such as at least 10%. Typically, the mass will reduce no more than 30%, such as no more than 20%.

The weight loss may be determined using thermogravimetric analysis (TGA) at 200 °C. For example, an HMA device may be used to conduct the TGA.

After drying the treated waste material, the moisture content is typically below 8 wt%, such as below 5 wt%, for example below 3 wt%, such as below 2 wt%, for example below 1 wt%, such as below 0.5 wt%.

In addition, using the method of the disclosure will enable us to extract high boiling-point-organics of the electrolyte such as ethylene carbonate (EC) from the mixture. This will make the drying process more effective and cost-efficient.

### Further processing

After drying the treated waste material, said material is sorted to obtain "black mass", which contain the valuable components of a battery.

Black mass is separated from the remaining battery components using any suitable manner that provides for adequate separation. For example, density separation and/or sieving may allow for isolation of black mass. In particular, it is typically possible to remove the majority of casing, current collectors, and separator.

When density separation is combined with sieving improved separation is obtained compared to separating via size separation methods (such as sieving) only.

The resulting black mass typically comprises components such as cathode active material, anode active material, binder, current collector remnants, solid electrolyte components and/or derivatives thereof, residual cellulose, and residual metal hydroxide and/or metal carbonate.

Further processing steps allows for isolation of the valuable metallic components of the black mass.

Additionally, the liquids which are removed during the drying step are recovered in a liquid recovery step.

The recovered liquids may be processed further.

The listing or discussion of an apparently prior published document in this specification should not necessarily be taken as an acknowledgement that the document is part of the state of the art or is common general knowledge.

Unless otherwise indicated, all technical and scientific terms used herein have the same meaning as commonly understood by one of ordinary skill in the art to which this invention pertains.

Preferences, options and embodiments for a given aspect, feature or parameter of the invention should, unless the context indicates otherwise, be regarded as having been disclosed in combination with any and all preferences, options and embodiments for all other aspects, features and parameters of the invention. This is especially true for the description of the process of preparing a cathode, and all its features, which may readily be part of the electrode stack, coated foil, sodium-ion cell, and battery as described herein.

### EXAMPLE 1

An experiment wherein an electrolyte comprising LiPF₆ was treated with aqueous NaOH was conducted.

Aqueous NaOH was added in a stepwise manner for a total of five times. The pH was followed using a pH-meter.

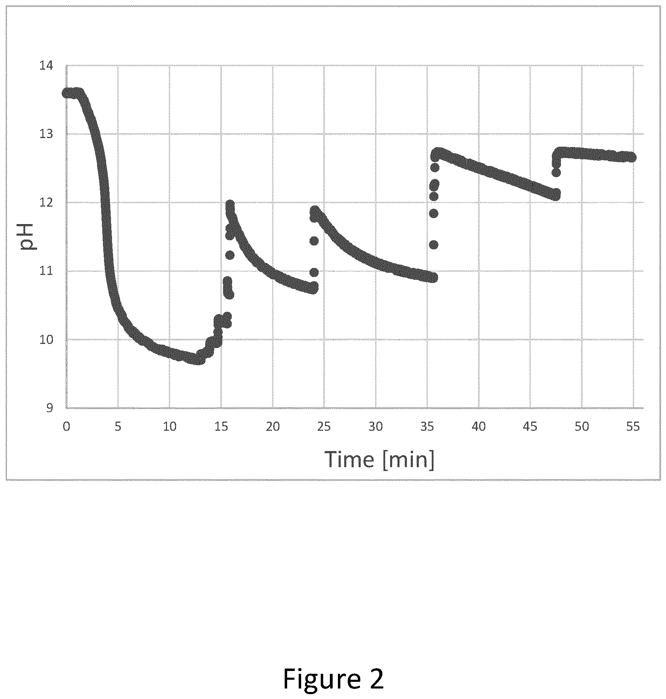

Figure 2 shows the pH evolution as a function of time during the experiment. The step change increases represent the points in time where additional aqueous NaOH was added to the system.

After each aqueous NaOH addition, the pH peaks after which the pH decreases until a local minimum is obtained (see Figure 2). At each of these minima, the conversion of LiPF₆ was determined. The conversion was determined using knowledge about the ratio with which LiPF₆ and NaOH reacts combined with knowledge about the amount of added NaOH.

The below table (Table 1) shows various information regarding the five local minima found in the graph:

**Table 1:**

| | | | | | |
|---|---|---|---|---|---|
| Time [minutes] | 13 | 24 | 35 | 47 | 55 |
| pH | 9.70 | 10.75 | 10.90 | 12.09 | 12.66 |
| % conversion of LiPF₆ | 59 | 83 | 88 | 97 | 100 |

Based on this experiment it is evident that the pH remains increasingly stable as the LiPF₆ is consumed. After the fifth addition, the pH remains stable and so it is concluded that the LiPF₆ has been fully consumed. Therefore, no additional NaOH is added.

### EXAMPLE 2

An *in silico* experiment was undertaken to simulate the conversion of soluble LiPF₆ to solid products (precipitates) by addition of a 10 wt% LiOH solution.

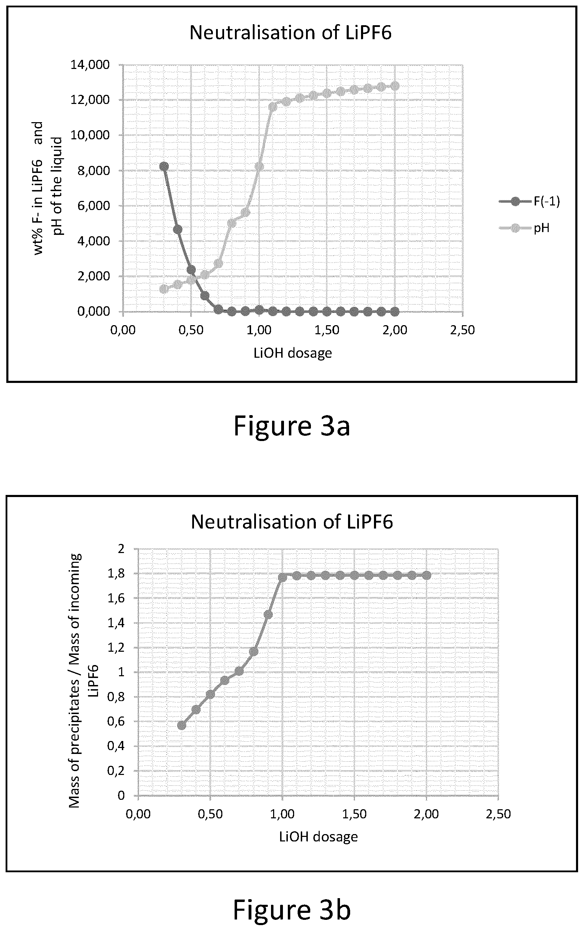

The data arising from the simulation is depicted in Figure 3a and Figure 3b.

Figure 3a shows the wt% of solubilised F⁻ (i.e. F- found in LiPF₆) and the associated pH of the liquid phase at various LiOH dosages. The LiOH dosages are calculated relative to the stoichiometric amount, which is expected to fully convert LiPF₆ into safer products, meaning that a LiOH dosage of 1 corresponds to a stochiometric amount. Evidently, the pH only raises slightly in the beginning, since hydroxide is consumed as it reacts with LiPF₆, however, when reaching full conversion (i.e. addition of a stochiometric amount) the pH rises more rapidly.

Figure 3b shows the mass of F-containing solids relative to the original mass of LiPF₆ as a function of LiOH dosage. The LiOH dosages are calculated relative to the stoichiometric amount, which is expected to fully convert LiPF₆ into safer products, meaning that a LiOH dosage of 1 corresponds to a stochiometric amount. This figure shows that the conversion of LiPF₆ results in an increase in solid mass.

## Claims

1. A method of treating solid waste material comprising a fluorine-containing electrolyte salt, said method comprising the steps of
a. providing solid waste material comprising a fluorine-containing electrolyte salt;
b. subjecting said solid waste material to an aqueous metal hydroxide and/or metal carbonate solution so as to convert at least part of the fluorine-containing electrolyte salt to metal fluoride.

2. The method of claim 1, wherein the fluorine-containing electrolyte salt comprises one or more selected from the group consisting of lithium hexafluorophosphate (LiPF₆), sodium hexafluorophosphate (NaPF₆), lithium hexafluoroarsenate (LiAsF₆), sodium hexafluoroarsenate (NaAsF₆), lithium hexafluoroantimonate (LiSbF₆), sodium hexafluoroantimonate (NaSbF₆), lithium tetrafluoroborate (LiBF₄), sodium tetrafluoroborate (NaBF₄), lithium bis(fluorosulfonyl)imide (F₂LiNO₄S₂), sodium bis(fluorosulfonyl)imide (F₂NaNO₄S₂), lithium bis(trifluoromethanesulfonyl)imide (LiC₂F₆NO₄S₂), sodium bis(trifluoromethanesulfonyl)imide (NaC₂F₆NO₄S₂), lithium trifluoromethanesulfonate (LiCF₃SO₃), sodium trifluoromethanesulfonate (NaCF₃SO₃), lithium oxalyldifluoroborate (LiBF₂C₂O₄), sodium oxalyldifluoroborate (NaBF₂C₂O₄), lithium tetrafluorooxalatophosphate (LiPF₄C₂O₄), and sodium tetrafluorooxalatophosphate (NaPF₄C₂O₄).

3. The method of any of the preceding claims, wherein the fluorine-containing electrolyte salt comprises one or more selected from the group consisting of lithium hexafluorophosphate (LiPF₆), sodium hexafluorophosphate (NaPF₆), lithium hexafluoroarsenate monohydrate (LiAsF₆), sodium hexafluoroarsenate monohydrate (NaAsF₆), lithium tetrafluoroborate (LiBF₄), and sodium tetrafluoroborate (NaBF₄).

4. The method of any of the preceding claims, wherein the metal hydroxide is selected from NaOH, KOH, LiOH, or a combination thereof; and/or wherein the metal carbonate is selected from Na₂CO₃, K₂CO₃, Li₂CO₃, or a combination thereof.

5. The method of any of the preceding claims, wherein step b involves depositing said aqueous metal hydroxide and/or metal carbonate solution onto the solid waste material.

6. The method of any of the preceding claims, wherein step b occurs under inert atmosphere.

7. The method of any of the preceding claims, wherein aqueous metal hydroxide and/or metal carbonate solution is added until a homogenous blend is achieved.

8. The method of any of the preceding claims, wherein the aqueous solution is added stepwise, and wherein the pH of the system is monitored such that when the pH remains stable for 5 minutes, no additional metal hydroxide and/or metal carbonate solution is added.

9. The method of any of the preceding claims, wherein after step b the process further comprises subjecting the treated solid waste material to drying at temperatures ranging from about 80 °C to about 300 °C.

10. The method of claim 9, wherein after drying the mass of the treated solid waste material is reduced by at least 5%.
